# EUROPEAN PATENT SPECIFICATION

(11) **EP 3 028 827 B1**
(45) Date of publication and mention of the grant of the patent: **26.02.2025**
(21) Application number: 14196582.2
(22) Date of filing: 05.12.2014
(51) Int. Cl.: B25J 15/00

(54) **Method and device for automating the assembly of automotive mirrors**
Verfahren und Vorrichtung zur Automatisierung des Zusammenbaus von Autospiegeln
Procédé et dispositif permettant d'automatiser l'assemblage de miroirs d'automobile

(43) Date of publication of application: 08.06.2016
(73) Proprietor: SMR Patents S.à.r.l., 2411 Luxembourg (LU)
(72) Inventor: KUMARAN, Muthu, Tiruvottriyur, Chennai 19 (IN); HERRMANN, Andreas, 71364 Winnenden-Baach (DE)
(74) Representative: Weber-Bruls, Dorothée

(56) References cited:
- EP-A1- 2 799 191
- WO-A1-2011/016968
- WO-A1-2012/173479
- WO-A2-2012/056115
- CN-U- 203 427 046
- DE-A1- 102007 039 384
- JP-A- 2009 006 460
- JP-A- 2011 125 958
- US-A- 5 116 094
- US-A1- 2006 182 603
- US-A1- 2012 068 484

## Description

The present invention refers to a device for automating the assembly of in particular automotive mirrors according to the pre-amble of claim 1.

In present days, the assembling of automotive side mirrors is mostly done manually by human beings within a manufacturing unit. This leads to high costs and is time consuming. Therefore there is the need for an automated robotic assembly line.

A gripping device for articles like motor vehicle headlights is known e.g. from DE 10 2005 062 706 A1. The known device has gripping units which exert gripping forces perpendicular to individual points of surfaces of such articles. Each gripping unit grips an article at one gripping point such that the article can be hold by the device. This allows for gripping of geometrically different articles of similar upper surface topology with the same device; but the gripping device is rather complicated and not suited for different surface topologies.

As mirror parts of an automotive side mirror like a housing part, a lighting module or a circuit board can have a large variety of geometries and/or topologies, even differing from model to model, presently most of the mirror parts are gripped in different manners with specific gripper designs. This requires time consuming and cost intensive gripper changes.

In order to provide a high degree of freedom, flexible circuit boards are used in automotive mirrors, see for example DE 10 2004 025 385. Such flexible circuit boards or wire harnesses provide terminals to be connected to different kinds of modules, like a blind spotter module, a ground light module and a turn signal module. The respective connection between the terminals and the modules and the subsequent attachment of the modules might even require assembling steps with gripper movements in different directions.

WO 2012/056115 A2 refers to the assembly of e.g. 6 reaction vessels to a tray with 6 seats. Each vessel is provided with a standard gripping collar to be gripped by a gripper via a snap connection. The collar can have different cross-sections. The gripper can be attached to a robotic arm which comprises sensors/detectors.

DE 10 2007 039 384 A1 teaches a gripping device to be attached to a robot at a top with a plurality of arms and being controlled via sensor signals. Each arm comprises an upper and a lower part connected via a joint and gripping fingers providing a plurality of degrees of freedom for moving the fingers.

EP 2 799 191 A1 discloses a gripping device to be attached to a robot with 2 arms. Each arm can be controlled for a rotational and a translational motion and functions as a suction gripper for food items.

JP 2009 006460 A refers to a robot hand capable of gripping a plurality of gripping objects. This robot hand comprises gripping mechanisms capable of opening and closing a pair of fingers and gripping a gripping object with fingers, and a relative position changing drive mechanism for changing a relative position between the gripping mechanism.

WO 2011/016968 A1 discloses a gripping device to be attached to a robot with grippers. Each gripper can be controlled for a rotational and a translational motion:
WO 2012/173479 A1 claims a.o. a manipulator for manipulating an item of crockery. A robot arm having at least two degrees of freedom; a gripper unit provided at an end of the robot arm; and a controller for controlling an operation of the robot arm and the gripper unit are comprised of the manipulator. The gripper unit comprises at least one gripper member, the gripper member comprising a gripper body; and a pair of fingers extending from the gripper body, the fingers being movable towards one another and away from one another, and each finger having an end carrying a clamping member for contacting the item of crockery. The gripper member is configured to be driven for rotating the clamping members around an axis parallel to a line connecting the ends of the fingers.

JP 2011 125958 A refers to a chuck device with chuck portions.

US 2006/182603 A1 teaches a manipulator for transporting food products. For example a food product arranged on a conveyor belt can be slided on two blades which can be moved relative to each other.

A clamp mechanism known from US 2012/068484 A1 includes a base defining two first sliding grooves, a sliding member slidable relative to the base and two second sliding grooves corresponding to the first sliding grooves respectively, a pair of first connecting members slidably received in the first sliding grooves respectively, a pair of second connecting members slidably received in the second sliding grooves respectively, a first clamp member connected to one first connecting member and one second connecting member, a second clamp member connected to the other first connecting member and the other second connecting member, an impelling member fixed to the sliding member; and a driver capable of driving the sliding member along with the first and second clamp members to move toward or away from each other in order to clamp or release an object, and the impelling member capable of removing the object when the object is released.

A plurality of gripper modules positioned in space apart relationship along a frame member provide an end-of-arm tool are described in US 5,116,094 A. A pair of gripper modules disposed on opposite sides of the end-of-arm tool each support a Hall effect sensor which is coupled through a signal processing circuit to control the heads of the gripper modules.

It is the object of the present invention to further develop the known device for automating the assembly of in particular automotive mirrors, to overcome the drawbacks of the prior art.

This object is solved by the characterizing portion of claim 1. Preferred embodiments of the device according to the invention are described in the sub-claims 2 to 5.

According to a first aspect of the invention the same is based on a modification of individual mirror parts in order to make them suitable for handling during an automated assembling of an automotive mirror within a manufacturing unit, namely such that any type of common basic gripper instead of several different grippers for handling mirror parts with different designs and thus different geometries and/or topologies can be used. The modification is to provide standard gripping points. Such standard gripping points can be provided by slots, cut outs, recesses, clips, straps and/or projections and can be introduced at any available area within the individual mirror parts with a shape (like square, rectangular, triangular, circular, hexagonal, octagonal or pentagonal) and dimension adapted to the gripper design or vice versa. As soon as a common gripper design has been selected, pre-defined gripping points can be introduced on the mirror parts such that they can be assembled by a robot or automated. This reduces the overall costs involved in setting up a production line. In long term it also helps reducing the overall maintenance costs of the production line and also reduces the overall production cycle time and assembling time involved. Using standard gripping points on individual automotive mirror part also enables a handling of these parts in any orientation or method by a robotic gripping device.

The slots, cut outs, recesses, clips, straps and/or projections providing the standard gripping points can fulfill an additional function like enabling a snap connection or can be provided by a functional member like a snap-in clips or even two terminals serving an electrical connection between a circuit board and an electric module like a lightning module.

According to a second aspect of the invention a robotic gripping device is provided which is in particular suited for handling mirror parts during the assembly of an automotive mirror, even in form of a flexible circuit board with e.g. n branches for connecting n electric modules to a power source, n being a member of the natural numbers above 1. Such a gripping device is provided with n gripping units each having one arm arranged around a central spine, each arm having a pair of 2 fingers, with the spine, the arms as well as the fingers being operated pneumatically, hydraulically and/or electrically for handling e.g. the n branches of a flexible circuit board, wire harnesses, mirror parts or any other applicable objects. Thus the gripping device can be operated by supplying for example air, oil, water or electrical current.

In case the spine has 2 degrees of freedom, namely for 1 translatory and 1 rotary movement, each arm is provided with 2 parts providing at least 1 further degree of freedom and each pair of fingers is provided with at least 1 additional degree of freedom, the gripping device is suited for ample assembly steps, even in different production directions. Thus, the gripping device is a multi operational gripper which can be used for different applications. By varying the features of the gripping units and by adjusting the position of the arms or fingers thereof, even more applications become possible.

The gripping device is designed based on the idea to benefit from a combination of the advantages of spider legs and a human palm with fingers and, therefore, is called spider gripper in the following.

The spider gripper can be directly integrated as an end effector tool to an industrial robot or to any type of machinery, but can also be used with an industrial robot or machinery via an automatic tool changer system where the tool side of the respective automatic tool changer module will be connected to the spider gripper top.

The preferred spider gripper has 6 arms and 6 pairs of fingers which are in particular designed for each holding a branch of a flexible circuit board. Each free end of an arm of the spider gripper has a small pneumatic or hydraulic cylinder or electrically operated motor based system for gripping one branch, inserting the terminals or connectors of said branch in corresponding sockets provided by an electric module and ejecting the branch at the end.

The number of arms and/or fingers of the spider gripper can be increased or decreased based on the design of the article to be handled, like the design of wire harnesses, and depending on the number of branches of involved flexible circuit boards. The position of the arms and fingers of the spider gripper relative to the central spine and/or relative to each other can be manually or pneumatically, hydraulically and/or electrically adjusted based on the handled articles.

The spider gripper spine, arms and fingers can be controlled individually. Sensors and mechanical stoppers can be used in the spider gripper for controlling the movement in particular of the individual arms and/or fingers.

The invention, together with further objects and advantages, may be best understood, by example, with reference to the following description of embodiments taken together with the accompanying schematic drawings:
- Fig. 1a: shows a perspective view of a first mirror part in form of a housing ring with first gripping points provided by straps.
- Fig. 1b: shows the first mirror part of Fig. 1a gripped by a gripping unit at first gripping points.
- Fig. 2a: shows a perspective view of a second mirror part in form of a top cap with second gripping points provided by clips.
- Fig. 2b: shows an enlargement of one of the clips of Fig. 2a with recesses.
- Fig. 2c: shows the second mirror part of Fig. 2a and 2b gripped by the gripping unit at second gripping points.
- Fig. 3a: shows a perspective view of a third mirror part in form of a mirror foot with third gripping points provided by cut outs.
- Fig. 3b: shows the third mirror part of Fig. 3a gripped by the gripping unit at the third gripping points.
- Fig. 4a: shows a perspective view of a fourth mirror part in form of a flexible circuit board with fourth gripping points provided by terminals.
- Fig. 4b: shows an enlargement of one of the arms of the fourth part of Fig. 4a having a module connected to its terminals.
- Fig. 5a: shows a perspective view of an alternative gripping device.
- Fig. 5b: shows an enlargement of one of the gripping units of the gripping device of Fig. 5a.

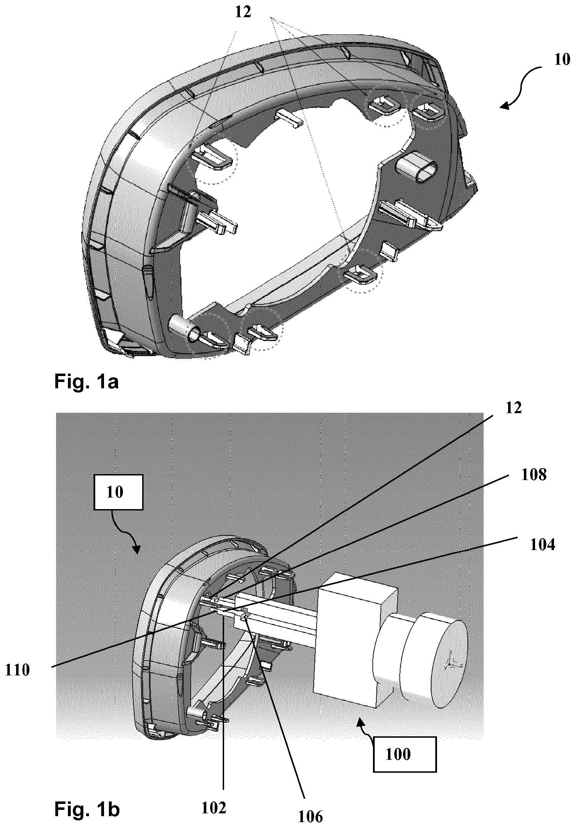

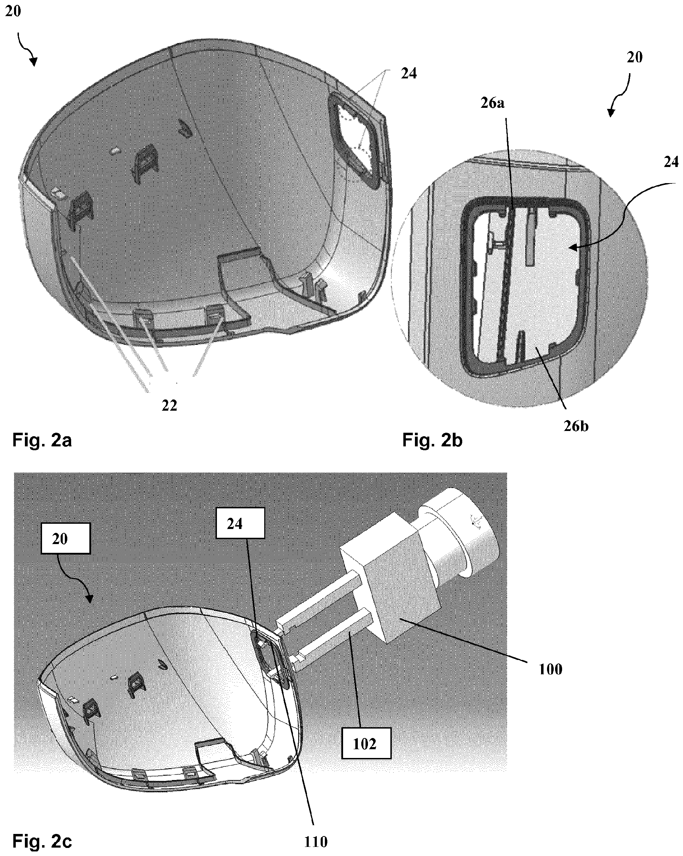

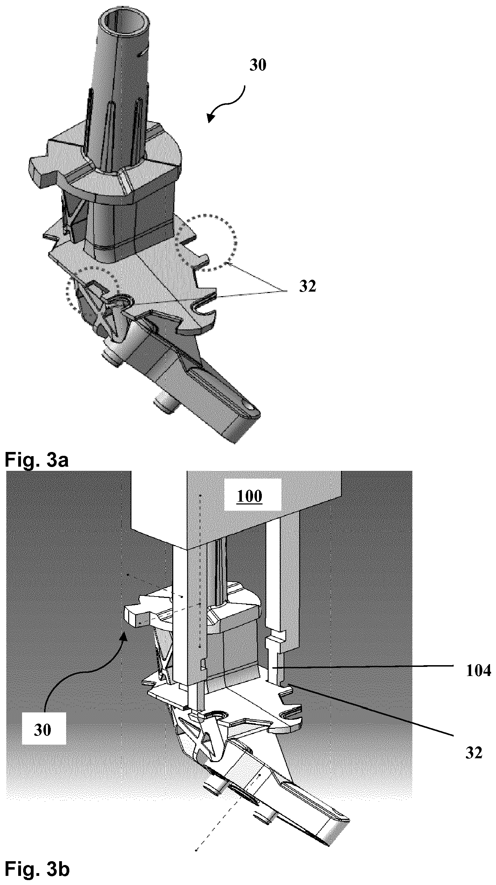

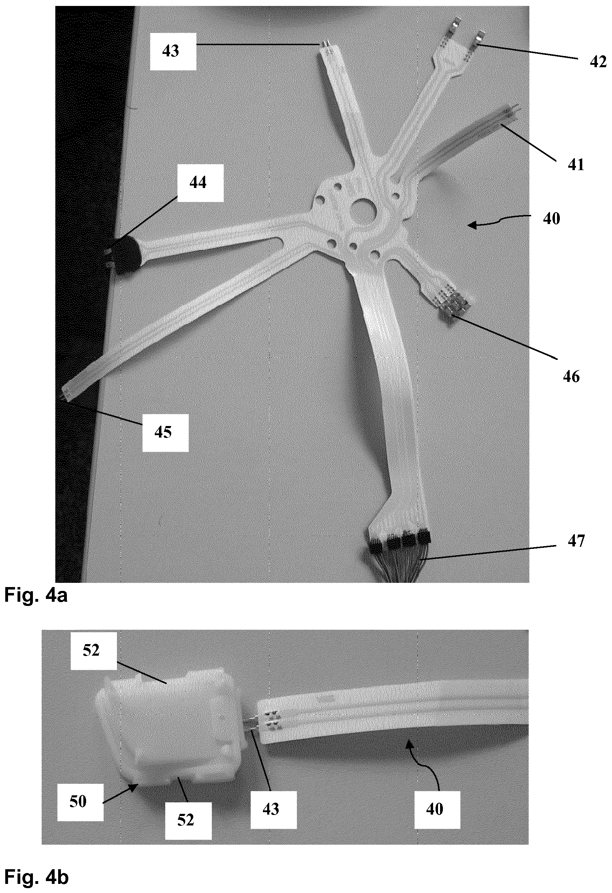

An automotive side mirror comprises a plurality of parts like a housing ring as shown in Fig. 1a, a top cap as shown in Fig. 2a, a mirror foot as shown in Fig. 3a and a flexible circuit board as shown in Fig. 4a. In order to assemble said parts in an automated production line with a standard or rather common gripper each part is provided with standard gripping points as described in the following in more detail.

The housing ring 10 shown in Fig. 1a comprises a plurality of straps 12 each providing first standard gripping points. This is further illustrated by Fig. 1b showing a standard gripping unit 100 with two gripping fingers 102 each having an inner surface 104 with a recess 106 and an outer surface 108 with a recess 110. Each strap 12 can be gripped between the inner surfaces 104 of the gripping fingers 102 of the gripping unit 100 in a standard manner.

The top cap 20 of Fig. 2a comprises two different kinds of second standard gripping points in form of clips 22 and 24. The clips 22 correspond substantially to the straps 12 shown in Fig. 1a and can be gripped between the inner surfaces 104 of the gripping fingers 102 of the gripping unit 100, whereas the clip 24 is gripped by the outer surfaces 108 of the gripping fingers 102 of the gripping unit 100 by entering the gripping fingers 102 into recesses 26a, 26b as best seen in Fig. 2b and 2c.

The clips 22 can also serve to enable a snap connection with another housing part of an automotive side mirror.

The mirror foot 30 of Fig. 3a is provided with two cut outs 32 forming standard gripping points with can be gripped between the inner surfaces 104 of the gripping fingers 102 of the gripping device 100 as shown in Fig. 3b.

Of particular interest for the present invention is the provision of standard gripping points by the flexible circuit board 40 of Fig. 4a having 6 branches each provided with terminals 41 to 46 to be connected to electrical modules as shown in Fig. 4b for one of the branches, whereas an additional branch is connected to cables 47 for connecting the electrical modules 50 to a not shown power supply.

Either the branches as such are provided with standard gripping points by selecting a standard width or providing cut outs or the terminals 41 to 46 as such provide gripping points such that gripping fingers 102 can grip the terminals in order to insert them into the respective electric module to achieve an electrical connection in line with Fig. 4b. The electrical modules 50 can be formed with recesses 52 providing said gripping points.

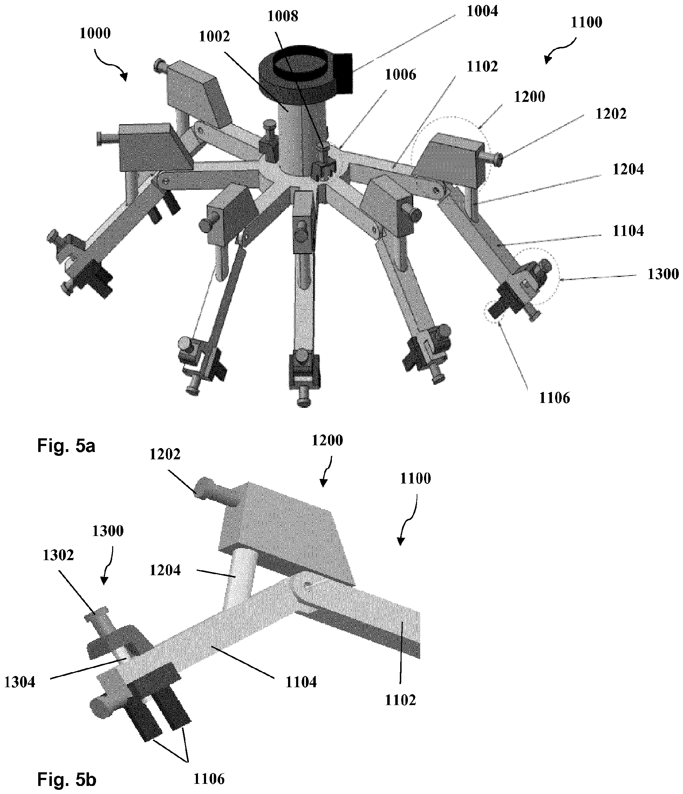

In order to handle a plurality of mirror parts, in particular in form of the flexible circuit board 40 with its plurality of branches, the invention also proposes a gripping device 1000 shown in Fig. 5a. Such a gripping device 1000 is provided with a center spine 1002 which is connected at its upper end in Fig. 5a to a tool connection means 1004 for the attachment to a not shown robot and at its lower end to six gripping units 1100. Via a center spine placing means 1006 operated by supplying air to air nipples 1008 the center spine 1002 can be moved upwards and downwards whereas a rotation of the center spine 1002 can be achieved manually.

Each gripping unit 1100 comprises an arm having two parts, in form of an upper gripping arm 1102 and a lower gripping arm 1104, which can be pivoted with respect to each other via an arm bending means 1200 provided with an air nipple 1202 pneumatically moving a piston 1204. At the free end of the arm of each gripping unit 1100 a pair of gripping fingers 1106 is provided, as best seen in Fig. 5b. The fingers 1106 of each pair cooperate with ejecting means 1300 each provided with an air nipple 1302 in order to pneumatically move a piston 1304 to eject an article gripped between the two gripping fingers 1106.

The gripping device 1000 can be controlled to move its gripping units 1100 like the legs of a spider with the additional advantage of fingers of a human palm. With this particular design it is possible to grip each of the 6 branches of the flexible circuit board 40 shown in Fig. 4a between a pair of gripping fingers 1106 and move said branches in different directions relative to each other allowing a high degree of freedom with respect to the arrangement of the electrical modules 50 within the automotive side mirror and still have them all connected to the power supply via the electrical circuit board 40.

Thus, the gripping device 1000 is not restricted to handling articles to be assembled in a single production direction, but provides a high degree of freedom enabling an optimal usage of flexible circuit boards.

### Reference sign listing

- 10: housing ring
- 12: strap
- 20: top cap
- 22: clip
- 24: clip
- 26a, 26b: recess
- 30: mirror foot
- 32: cut out
- 40: flexible circuit board
- 41-46: terminals
- 47: cables
- 50: electrical module
- 52: recess
- 100: gripping unit
- 102: gripping finger
- 104: inner surface
- 106: recess
- 108: outer surface
- 110: recess
- 1000: gripping device
- 1002: center spine
- 1004: tool connection means
- 1006: center spine placing means
- 1008: air nipple
- 1100: gripping unit
- 1102: upper gripping arm
- 1104: lower gripping arm
- 1106: gripping finger
- 1200: arm bending means
- 1202: air nipple
- 1204: piston
- 1300: ejecting means
- 1302: air nipple
- 1304: piston

## Claims

1. Device for automating the assembly of at least two parts (10, 20, 30, 40, 50) with a gripping device (1000) comprising a plurality of gripping units (1100) for gripping the parts (10, 20, 30, 40, 50) at gripping points, with
the gripping units (1100) being moveable relative to each other and all together,
each gripping unit (1100) comprising a pair of 2 fingers (1106) for gripping one part (10, 20, 30, 40, 50) and an arm for moving said pair of 2 fingers (1106), and
the fingers (1106) of each pair being moveable,
**characterized in that**
the parts (10, 20, 30, 40, 50) are mirror parts of automotive mirrors, are each provided with at least one standard gripping point and comprise an electrical module (50) and a flexible circuit board (40),
a control unit cooperates with the gripping device (1000), wherein the control unit is configured to control the gripping units (1100) for gripping the parts (10, 20, 30, 40, 50) at the standard gripping points and assembling the parts (10, 20, 30, 40, 50) by controlling the gripping device (1000) and to control each pair of fingers (1106) for gripping a branch of a flexible circuit board (40) having a plurality of branches to insert terminals (41-46) or wire harnesses carried by the branches into electrical modules (50), and
the gripping units (1100) are designed to be moved in different directions during the assembling.

2. Device according to claim 1, wherein
the fingers (1106) of each pair are cooperating with an ejection means (1300) for ejecting the part (10, 20, 30, 40, 50) gripped by the respective pair of fingers (1106).

3. Device according to any one of the preceding claims, wherein
the gripping units (1100) are attached to a center spine (1002), with the spine (1002) being controllable to conduct a rotary and/or translatory movement via a center spine placing means (1006).

4. Device according to any one of the preceding claims, wherein
each gripping arm comprises an upper arm (1102) and a lower arm (1104), with the upper arm (1102) being moveable relative to the lower arm (1104).

5. Device according to any one of the preceding claims, wherein
the control unit receives signals from at least one sensor.

## Patentansprüche

1. Vorrichtung zum Automatisieren des Zusammenbaus von wenigstens zwei Teilen (10, 20, 30, 40, 50) mit einer Greifvorrichtung (1000), umfassend eine Mehrzahl von Greifeinheiten (1100) zum Greifen der Teile (10, 20, 30, 40, 50) an Greifpunkten, wobei die Greifeinheiten (1100) in Bezug aufeinander und alle gemeinsam beweglich sind, wobei jede Greifeinheit (1100) ein Paar von 2 Fingern (1106) zum Greifen von einem Teil (10, 20, 30, 40, 50) und einen Arm zum Bewegen dieses Paars von 2 Fingern (1106) umfasst und wobei die Finger (1106) jedes Paars beweglich sind,
**dadurch gekennzeichnet, dass**
die Teile (10, 20, 30, 40, 50) Spiegelteile von Autospiegeln sind,
jeweils mit wenigstens einem Standardgreifpunkt versehen sind und
ein elektrisches Modul (50) und eine flexible Leiterplatte (40) umfassen,
eine Steuereinheit mit der Greifvorrichtung (1000) kooperiert, wobei die Steuereinheit dazu ausgestaltet ist, die Greifeinheiten (1100) so zu steuern, dass sie die Teile (10, 20, 30, 40, 50) an den Standardgreifpunkten greifen und die Teile (10, 20, 30, 40, 50) zusammenbauen durch Steuern der Greifvorrichtung (1000), und jedes Paar von Fingern (1106) so zu steuern, dass es einen Zweig einer flexiblen Leiterplatte (40) greift, die eine Mehrzahl von Zweigen zum Einführen von Anschlüssen (41-46) oder Kabelbäumen, die von den Zweigen getragen werden, in elektrische Module (50) aufweist, und
die Greifeinheiten (1100) dazu ausgebildet sind, während des Zusammenbaus in verschiedene Richtungen bewegt zu werden.

2. Vorrichtung nach Anspruch 1, wobei die Finger (1106) von jedem Paar mit einem Auswurfmittel (1300) zum Auswerfen des Teils (10, 20, 30, 40, 50), das von dem jeweiligen Paar von Fingern (1106) gegriffen wird, kooperieren.

3. Vorrichtung nach einem der vorangehenden Ansprüche, wobei die Greifeinheiten (1100) an einer mittleren Säule (1002) angebracht sind, wobei die Säule (1002) so steuerbar ist, dass sie eine Dreh- und/oder Verschiebebewegung über ein Platzierungsmittel (1006) der mittleren Säule ausführt.

4. Vorrichtung nach einem der vorangehenden Ansprüche, wobei jeder Greifarm einen Oberarm (1102) und einen Unterarm (1104) umfasst, wobei der Oberarm (1102) in Bezug auf den Unterarm (1104) beweglich ist.

5. Vorrichtung nach einem der vorangehenden Ansprüche, wobei die Steuereinheit Signale von wenigstens einem Sensor empfängt.

## Revendications

1. Dispositif d'automatisation de l'assemblage d'au moins deux pièces (10, 20, 30, 40, 50) avec un dispositif de saisie (1000) comprenant une pluralité d'unités de saisie (1100) pour saisir les pièces (10, 20, 30, 40, 50) à des points de saisie, les unités de saisie (1100) étant mobiles les unes par rapport aux autres et toutes ensemble, chaque unité de saisie (1100) comprenant une paire de 2 doigts (1106) pour saisir une pièce (10, 20, 30, 40, 50) et un bras pour déplacer ladite paire de 2 doigts (1106), et les doigts (1106) de chaque paire étant mobiles,
**caractérisé en ce que**
les pièces (10, 20, 30, 40, 50) sont des pièces de rétroviseur de rétroviseurs automobiles,
sont chacune munies d'au moins un point de saisie standard et
comprennent un module électrique (50) et une carte de circuit imprimé flexible (40),
une unité de commande coopère avec le dispositif de saisie (1000), l'unité de commande étant configurée pour commander les unités de saisie (1100) afin de saisir les pièces (10, 20, 30, 40, 50) aux points de saisie standard et d'assembler les pièces (10, 20, 30, 40, 50) en commandant le dispositif de saisie (1000), et pour commander chaque paire de doigts (1106) pour saisir une branche d'une carte de circuit imprimé flexible (40) ayant une pluralité de branches pour insérer des bornes (41-46) ou des faisceaux de fils portés par les branches dans des modules électriques (50), et
les unités de saisie (1100) sont conçues pour être déplacées dans différentes directions pendant l'assemblage.

2. Dispositif selon la revendication 1, dans lequel les doigts (1106) de chaque paire coopèrent avec un moyen d'éjection (1300) pour éjecter la pièce (10, 20, 30, 40, 50) saisie par la paire de doigts (1106) respective.

3. Dispositif selon l'une quelconque des revendications précédentes, dans lequel les unités de saisie (1100) sont attachées à un rachis central (1002), le rachis (1002) pouvant être commandé pour conduire un mouvement de rotation et/ou de translation par l'intermédiaire d'un moyen de placement du rachis central (1006).

4. Dispositif selon l'une quelconque des revendications précédentes, dans lequel chaque bras de saisie comprend un bras supérieur (1102) et un bras inférieur (1104), le bras supérieur (1102) étant mobile par rapport au bras inférieur (1104).

5. Dispositif selon l'une quelconque des revendications précédentes, dans lequel l'unité de commande reçoit des signaux provenant d'au moins un capteur.
